# EUROPEAN PATENT APPLICATION

(11) **EP 3 285 391 A1**
(43) Date of publication of application: **21.02.2018**
(21) Application number: 17154231.9
(22) Date of filing: 01.02.2017
(51) Int. Cl.: H02P 5/00, A61G 7/018, A47B 9/00, A47C 20/04

(54) **FURNITURE CONTROL SYSTEM AND METHOD FOR CONTROLLING AN ADJUSTABLE FURNITURE SYSTEM**

(30) Priority: 17.08.2016 US 201662376258 P
(71) Applicant: LOGICDATA Electronic & Software Entwicklungs GmbH, 8530 Deutschlandsberg (AT)
(72) Inventor: Siderits, Daniel, Frauental an der Lassnitz (AT); Semmelrath, Rene, 8212 Pischelsdorf am Kulm (AT)
(74) Representative: Epping - Hermann - Fischer

(57) **Abstract**

A furniture control system has a first and a second control unit to which a first and a second actuator are connectable. The first control unit is configured to control the first actuator based on first actuation data and comprises a first data pool unit for storing first data including the first actuation data. The second control unit is configured to control the second actuator based on second actuation data and comprises a second data pool unit for storing second data including the second actuation data. The control system is configured to synchronize the first and second data upon a change of the first and/or the second actuation data.

## Description

The present disclosure relates to a furniture control system, particularly for controlling two or more adjustable furniture parts, and to a method for controlling an adjustable furniture system, particularly having two or more adjustable parts.

Adjustable furniture, like tables, in particular office tables, beds or seating furniture are well-known in the art. Such furniture is used in the home area as well in the office area or other commercial applications. For some furniture systems the concept of a linked system, i.e. operating two or more identical systems in parallel, is quite popular. Conventional approaches for achieving a synchronous operation or movement of the whole system require a high amount of data exchange and high speed communication techniques. Moreover, a maximum number of nodes of the linked system is limited in conventional approaches.

It is therefore an object to provide an improved communication concept that allows a synchronous operation of furniture components in a reliable fashion.

This object is achieved with the subject-matter of the independent claims. Embodiments and developments are subject-matter of the dependent claims.

The improved communication concept is based on the idea that instead of continuously communicating between the nodes of an adjustable furniture system, communication is only performed event-driven, for example if some event occurs that leads to a change of state of the furniture system. To this end, a distributed data pool is provided, where each node of the furniture has a local copy of the data of the data pool. If data in one local copy changes in the case of an event, these changes will then be synchronized to the other local copies. Hence, in instances where there is no reasonable or caused event, the nodes or local copies may not have to exchange information of any kind. After one initial command based on an event, all nodes in a system know exactly what they have to do, and all nodes have exactly the same knowledge at any point in time.

The main parts of the improved communication concept are a communication infrastructure, distributed nodes connected to this infrastructure and the so-called data pool.

The communication infrastructure can be any communication technique, either tethered (serial, parallel, Ethernet, or the like) or wireless (Infrared, Bluetooth, Wi-Fi, proprietary RF, or the like). The infrastructure just has to be capable of transmitting messages between the connected nodes.

For example, the distributed nodes connected to the communication infrastructure are usually control units for operating adjustable, in particular height adjustable, furniture (but also can be any other device performing similar tasks) as well as user input devices (e.g. a cable handset or a remote handset). Each of the distributed nodes implements the so-called data pool.

The data pool basically consists of two parts: a memory structure and appropriate methods for accessing / updating this memory structure. The memory structure acts as a kind of blackboard where participants (i.e. connected nodes) can add information (i.e. write a new event or new data to the blackboard) and read information (i.e. check if there is a new event or new data from another node) using the appropriate data pool methods. Each of the distributed nodes connected to the communication infrastructure has its own *copy* of the data pool. In the background the data pool takes care of exchanging / synchronizing the information present in the memory structure either based on events or on changed data. In case there is no change / update in any information stored in the data pool there also is no update to be done with other data pool instances in a distributed system.

Accordingly, this significantly reduces the amount of information which has to be continuously exchanged between individual nodes. This allows any combination of the following:
- utilize simpler communication protocols;
- use low-speed communication techniques;
- less information exchange in combination with low-speed communication techniques, which might also be more noise or interference-resistant;
- increase the maximum number of nodes in a cascaded system;
- continuous communication is only used to ensure that the communication link is stable.

According to implementations of the improved communication concept, driving to a specific position or height usually requires only one or two communication messages to be transmitted between the devices of the cascaded system. Depending on the system requirements, the periodic communication for checking the data link can also be significantly reduced.

An example embodiment of a furniture control system according to the improved communication concept comprises a first and a second control unit. A first actuator is connectable to the first control unit and a second actuator is connectable to the second control unit. For example, the first and the second actuator effect an adjustment of furniture parts. The first control unit is configured to control the first actuator based on first actuation data and comprises a first data pool unit for storing first data including the first actuation data. Similarly, the second control unit is configured to control the second actuator based on second actuation data and comprises a second data pool unit for storing second data including the second actuation data. For example, the first and the second data pool unit form parts of the data pool described above. The control system is configured to synchronize the first and second data upon a change of the first and/or the second actuation data. Accordingly, less communication and exchange of information is necessary as only changes have to be synchronized.

While only two control units associated data pool units are described above for the ease of explanation, a furniture control system may also have a greater number of control units with associated data pool units that are implemented accordingly. In this way, larger sets of furniture may be controlled, for example.

The first and the second actuation data may include information relating to a desired operation of the first and/or the second actuator. For example, the first and/or the second actuation data include at least one of the following: a driving command for the connected actuator, a target position for the actuator, a driving speed, an acceleration profile, a deceleration profile. Driving commands may include driving of the actuator in a specific direction and/or to a specific position. In particular, such driving commands are only limited by the functionality of the actuator, e.g. which spatial dimensions can be controlled with the actuator or the like. If a driving speed is selectable for the actuator, defining the driving speed in the actuation data may ensure that both actuators operate synchronously. Such synchronous operation can also be supported by providing a specific acceleration profile, i.e. how fast the actuator should accelerate from e.g. the still stand to a target driving speed or a full driving speed. Similarly, the deceleration profile can define the stopping procedure for the actuator at the end of an action.

In some implementations, the first control unit is configured to receive first event data and the second control unit is configured to receive second event data. Furthermore, the first control unit is configured to set or change the first actuation data based on the first event data. Similarly, the second control unit is configured to set or change the second actuation data based on the second event data.

For example, such event data may be generated by a user input device connected to the furniture control system or to one of the first and the second control unit. For example, the user input device provides a command to the control system or to one of the control units in response to a user input. Such a command may have the effect of an event resulting in respective event data and finally respective actuation data.

Such a user input device may be a handset connected via a tethered or a wireless connection. In addition or as an alternative, the user input device can also be implemented with an application or program on a mobile device like a mobile phone or a tablet or on a classical personal computer or notebook computer.

In some implementations, the first data further include the first event data and the second data further include the second event data. In such configuration the control system is configured to synchronize the first and second data upon a change of the first and/or the second event data. For example, a user input device as described before may also have a data pool unit being part of the system's data pool. Hence, if an event or command is triggered by the user input device, respective event data can be directly synchronized to the control units for further processing, e.g. generating respective actuation data.

In various implementations, the first and/or the second event data may include a command received from the user input device connected to the control system. Event data may also include an error condition signalled by at least one of the first actuator and the second actuator, or a hardware fault signal by at least one of the first and the second actuator. For example event data may also include a signal that a target position cannot be reached by at least one of the first and the second actuator or a signal that a driving command cannot be executed by one of the actuators. Moreover generally speaking, event data may include information about an event that is suitable for inducing a change of state of at least one of the first and the second actuator.

As described before, a synchronization between the data pool units preferably only takes place if data contained in the data pool unit change in order to avoid unnecessary communication.

Moreover, in some implementations the first and the second control units are configured to execute a driving command for the respective connected actuator only after synchronization of the first and the second data. This further ensures a reliable synchronous operation of the actuators.

For the synchronization of the data pool units, the control system is preferably configured to withhold from synchronizing the first and second data if no change of any of the first and the second data occurs. In other words, synchronization only takes place if data indeed change.

In some further preferable implementations, the first and the second data pool unit are configured to withhold from communicating with each other if no change of any of the first and the second data occurs.

According to the improved communication concept, also a method for controlling an adjustable furniture system is provided. Such adjustable furniture system inter alia comprises a user input device, a first and a second actuator and a first and a second control unit with a first and a second data pool unit. According to an example implementation of such a method, the user input device sends command data to the first control unit. The first control unit generates first actuation data based on the command data and stores the first actuation data in the first data pool unit. After detection of the storage of the first actuation data in the first data pool unit, second actuation data are stored in a second data pool unit by synchronizing the first data pool unit to the second data pool unit. After completion of the synchronization, the first control unit controls the first actuator based on the first actuation data and the second control unit controls the second actuator based on the second actuation data. The synchronization and the time flow of the actual control of the actuators ensure a reliable synchronous operation of the actuators with reduced communication effort.

For example, controlling the first and the second actuator comprises executing a driving command included in the first and second actuation data. In some implementations, event data are received by the first and/or the second control unit, wherein the event data are stored in the first or the second data pool unit. The first data pool unit is synchronized to the second data pool unit after detection of the storage of the event data. For example, the first or the second actuation data are generated based on the event data.

For the definition of actuation data and event data it is referred to the corresponding definitions given in the description of the embodiments of a furniture control system.

Preferably, the method withholds from synchronizing the first and the second data pool unit if no change of any of the first and the second actuation data occurs. In addition, or as an alternative, the first and the second data pool unit withhold from communicating with each other if no change of any of the first and the second actuation data occurs.

In further implementations of the improved communication concept, a furniture system includes at least two parts of adjustable furniture and a furniture control system as described above.

For example, a table system may include a first and a second table and a furniture control system as described above, wherein the first table includes the first control unit and the first actuator and the second table includes the second control unit and the second actuator. A user input device may be provided at one or both of the tables.

In some developments, such a table system may include more than two tables, for example three or more tables. Each of the additional tables includes a respective control unit with a data pool unit that is synchronized to the other data pool units in the same manner as described before.

In further implementations of the improved communication concept, a bed system includes a first adjustable bed with the first control unit and a first actuator and a second adjustable bed with the second control unit and a second actuator. For example, two individually controllable single beds can be combined to a commonly controllable double bed like a king-size bed with the improved communication concept.

A furniture control system according to the improved communication concept can also be applied to seating furniture like a set of at least two recliners or sleeping chairs or the like.

In the following, the improved communication concept is explained in detail with the aid of exemplary implementations by reference to the drawings. Components or elements that are functionally identical or have an identical effect may be denoted by identical references. Identical components and/or components with identical effects may be described only with respect to the figure where they occur first. The description is not necessarily repeated in subsequent figures.

In the drawings:
- Figure 1: shows an example implementation of a furniture control system according to the improved communication concept;
- Figure 2: shows a table system with a furniture control system according to the improved communication concept;
- Figure 3: shows a bed system with a furniture control system according to the improved communication concept;
- Figure 4: shows a further example implementation of a furniture control system; and
- Figure 5A: to Figure 5F show an example time flow during application of the improved communication concept.

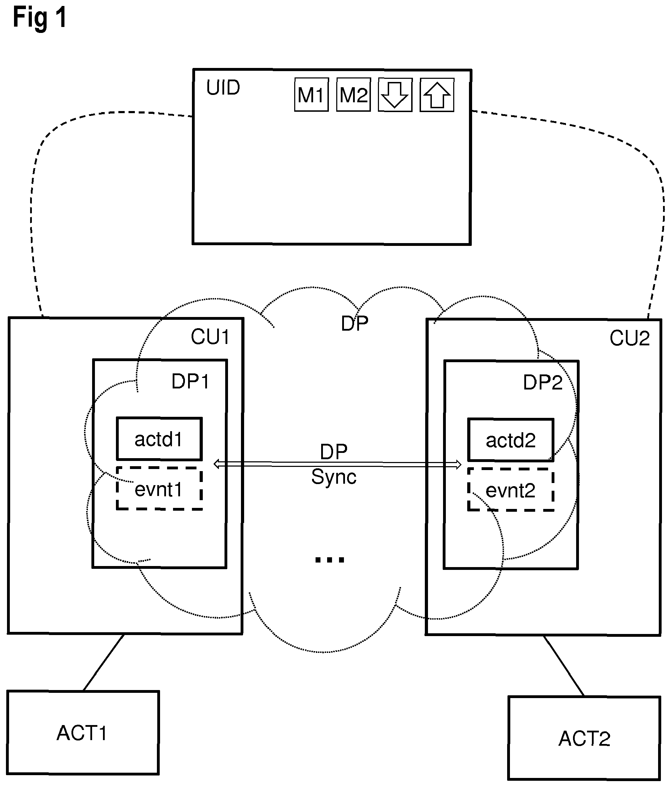

Figure 1 shows an example implementation of a furniture control system with a first control unit CU1 and a second control unit CU2. In addition, a user interface device UID is provided which may be part of the furniture control system or be external to the furniture control system. A first actuator ACT1 is connected to the first control unit CU1, and a second actuator ACT2 is connected to the second control unit CU2. The first control unit CU1 includes a first data pool unit DP1 for storing first actuation data actd1 and optionally storing first event data evnt1. Similarly, the second control unit CU2 includes a second data pool unit DP2 for storing second actuation data actd2 and optionally storing second event data evnt2.

The first and the second data pool unit DP1, DP2 form parts of a data pool DP that has a synchronization mechanism DP SYNC.

The user interface device UID is shown with example buttons, like a first memory button M1, a second memory button M2, an up button and a down button. These buttons may be physically present and e.g. implemented as mechanical buttons of any kind, or may also be interactive buttons displayed on a display of a handset, a mobile device or a computer screen. The user interface device UID may be connected to one of the control units CU1, CU2 by means of a tethered connection or alternatively with a wireless connection. It is also possible that the connection type can be switched.

The furniture control system may be implemented in any furniture system where two or more adjustable furniture parts are included and which should be controlled synchronously.

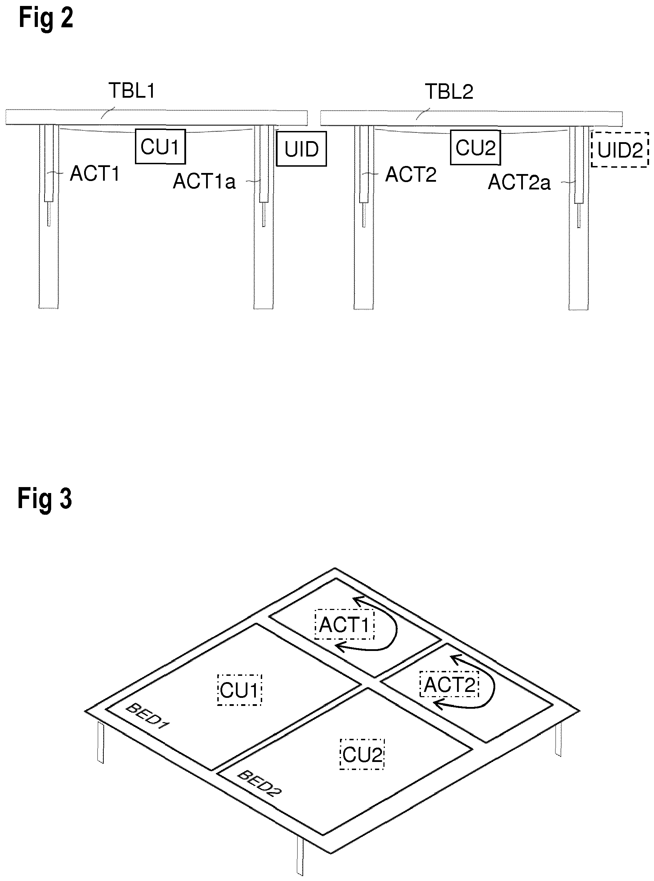

Referring to Figure 2, a table system with a furniture control system according to the improved communication concept is shown, for example according to the implementation shown in Figure 1. The table system comprises a first table TBL1 having the first control unit CU1 and a pair of first actuators ACT1, ACT1a. In addition, a user input device UID is provided at the first table TBL1. Similarly, the second table TBL2 has the second control unit CU2, to which a second pair of actuators ACT2, ACT2a is connected. Optionally, a second user interface device UID2 can be provided at the second table TBL2.

Each of the tables TBL1, TBL2 can be controlled individually. With the furniture control system, synchronous operation, in particular height adjustment of both tables TBL1, TBL2, is possible.

Referring to Figure 3, a bed system with a first bed BED1 and a second bed BED2 and a furniture control system with a first and a second control unit CU1, CU2 and a first and a second actuator ACT1, ACT2 is shown. For example, each of the actuators ACT1, ACT2 is able to change an angle of elevation of a head part of the respective bed. With the furniture control system, synchronous operation of both actuators ACT1, ACT2 is possible. Hence, the two single beds BED1, BED2 are operated like one king-size bed or the like. A user interface device for the bed system is omitted in Figure 3 for a better overview but can be provided for user interaction.

Referring back to Figure 1, operation of the furniture control system is described. The first control unit CU1 is configured to control the first actuator based on the first actuation data actd1, and the second control unit CU2 is configured to control the second actuator ACT2 based on the second actuation data actd2.

During operation of the furniture control system, a user may initiate a command via the user input device UID. This command is provided for example to the first control unit CU1. The first control unit CU1 recognizes the command as an event that, for example, is suitable for inducing a change of state of at least one of the first and the second actuators ACT1, ACT2. Consequently, the first control unit CU1 generates or derives first actuation data actd1 from the command, respectively event, and stores the actuation data actd1 in the first data pool unit DP1. In other words, the content of the data stored in the data pool unit DP1 is changed. Upon this change, respectively the detection of such change, the data pool DP, respectively the control system, initiates a synchronization between the first and the second data pool unit DP1, DP2, such that the first actuation data actd1 are synchronized to the second actuation data actd2 stored in the second data pool unit DP2.

Preferably, such synchronization DPSYNC is transparent to the user and even to the control unit CU1, CU2. For example, a specific synchronization protocol is established between the first and the second data pool unit DP1, DP2. The communication between the data pool units DP1, DP2 for this synchronization DP SYNC takes place over a tethered or wired connection or via a wireless connection, whatever is more suitable in the respective configuration.

After completion of the synchronization process, the first and the second control units execute the respective driving command defined by the actuation data actd1, actd2, thereby ensuring synchronicity between the two actuators ACT1, ACT2.

As indicted by the ellipsis symbol in the data pool DP, the furniture control system may include further control units with respective data pool units that may be synchronized in the same manner as described above.

In preferable implementations the control system is configured to withhold from synchronizing the first and second data pool unit DP1, DP2 if no change of any of the data stored in the data pool units DP1, DP2 occurs. Moreover, preferably the first and the second data pool units DP1, DP2 withhold from communicating with each other if no change of any of the data stored in the first and the second data pool unit DP1, DP2 occurs.

However, besides the actuation data actd1, actd2, the data pool units DP1, DP2 may be configured to also store the event data evnt1, evnt2. Such event data generally may relate to event information that is suitable for inducing a change of state of at least one of the first and the second actuator ACT1, ACT2.

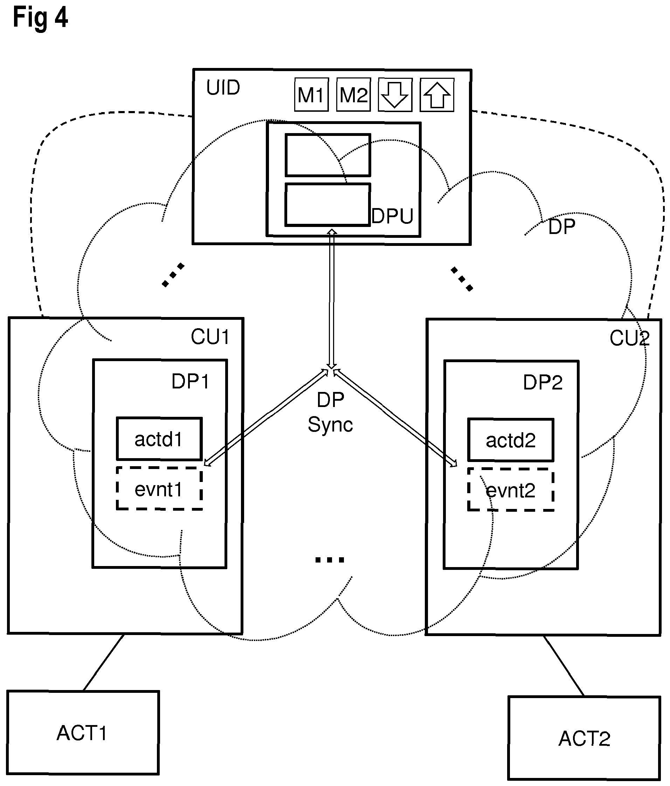

Figure 4 shows a further example implementation of a furniture control system according to the improved communication concept that is based on the embodiment of Figure 1. A main difference is given by the implementation and inclusion of the user interface device into the control system, in particular into the data pool DP. Hence, only those differences will be described in the following.

In the example implementation of Figure 4, the user interface device UID includes a separate data pool unit DPU that is part of the data pool DP together with its synchronization mechanism. In particular, a user-induced event can be directly stored in the data pool unit DPU, which will be synchronized to the other data pool units DP1, DP2 after detection of the changed data. Following that synchronization, at least one of the control units may generate respective actuation data that will also be synchronized. After that synchronization, a respective driving command associated with the actuation data can be executed, i.e. the actuators ACT1, ACT2 perform the desired action.

It should be apparent to the skilled reader that also the implementation of Figure 4 can be applied to the furniture systems shown in Figure 2 and Figure 3.

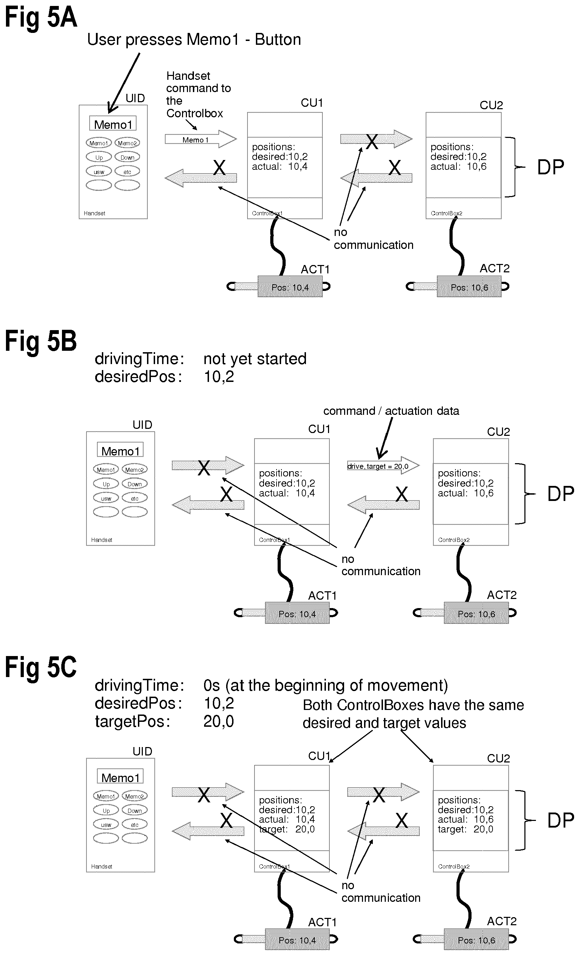

The scenario shown in Figure 5A to Figure 5F shows the usage of the improved communication concept based on the following system structure:
- two cascaded control units: first control unit CU1 and second control unit CU2;
- one actuator is connected to each of the control units; actuator ACT1 is connected to first control unit CU1 and actuator ACT2 is connected to second control unit CU2;
- a user input device UID, such as a handset, is connected to first control unit CU1.

Figure 5A shows the state of the system and the data pool DP in idle state. The user presses the Memol button on the handset UID, and the first control unit CU1 receives the handset command. No other communications are shown taking place. In this scenario the handset communication protocol does not matter.

After receiving the command from the handset UID, the first control unit CU1 transforms the handset command Memol to a target positions of 20.0, and sends the desired user input to the data pool DP as depicted in Figure 5B. The data pool DP can be seen as a virtual blackboard, in practice a memory structure within the control units and appropriate R/W methods represent the data pool DP. No other communications are shown taking place.

After both control units CU1, CU2 received / read the new information written to the data pool DP, that is driven to position 20.0 (in this example, position 20.0 has been stored as memory position 1), each control unit independently sets its target position to 20.0 as shown in Figure 5C. At this point in time the movement of the actuators ACT1 and ACT2 starts. Based on a soft start mechanism the desired position for the next time interval (e.g. 1s) is computed.

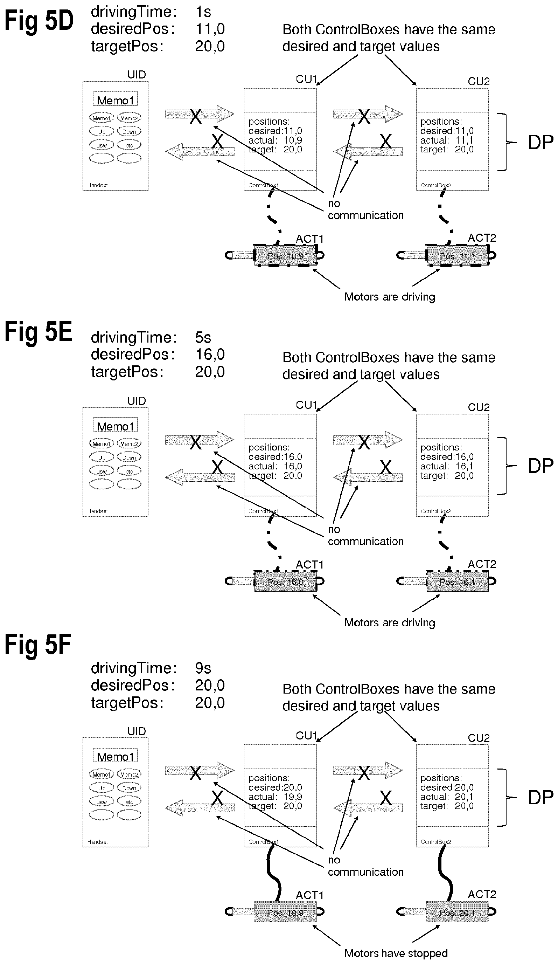

After this time period the actuators ACT1 and ACT2 of each of the control units CU1 and CU2 approximately reach the desired position for this point in time as shown in Figure 5D. Due to individual deviations such as load conditions the positions reached may vary within a certain limit, or at different driving speeds. In another aspect of the disclosure, the driving rates can be synchronized or aligned for co-movement between the multiple motors of the actuators ACT1, ACT2. In another aspect, the cascading communication addressed within this disclosure can include synchronized co-movement of multiple motors. The phrase "within a certain limit" can refer to when a motor, respectively actuator, reaches its final position, there is usually a deceleration ramp in place, i.e. the motor does not stop from 5000 rpm to 0 rpm within one step. Based on the actual mechanical load of the motor the last few revolutions of two synchronized motors might differ, i.e. the first actuator ACT1 stops after a total of 50.000 revolutions, the second actuator ACT2 stops after a total of 49.970 revolutions.

Figure 5E shows the driving example further advanced in time. The control units CU1 and CU2 perform identical computations, and thus, they keep the positions of the actuators ACT1 and ACT2 synchronized.

Figure 5F shows the end of the driving scenario. The actuators ACT1 and ACT2 connected to the control units CU1 and CU2, respectively, have reached their target position within a certain limit. The control units CU1 and CU2 have stopped their driving routine. The illustrated aspect of the disclosure shows a certain limit of 0.1 positional units. Higher or lower tolerances can be included.

This driving example impressively shows the following: except for two points in time no communication is necessary between the cascaded control units. These two points are shown in Figure 5B where the first control unit CU1 writes the driving command to the data pool DP and in Figure 5C where the first control unit CU1 and second control unit CU2 read the driving command together with the target value from the data pool DP.

### Reference list

- CU1, CU2: control unit
- DP1, DP2, DPU: data pool unit
- DP: data pool
- DPSYNC: synchronization
- ACT1, ACT1a: actuator
- ACT2, ACT2a: actuator
- UID, UID2: user interface device
- actd1, actd2: actuation data
- evnt1, evnt2: event data
- TBL1, TBL2: table
- BED1, BED2: bed

## Claims

1. A furniture control system, comprising
- a first control unit, to which a first actuator is connectable, the first control unit being configured to control the first actuator based on first actuation data and comprising a first data pool unit for storing first data including the first actuation data;
- a second control unit, to which a second actuator is connectable, the second control unit being configured to control the second actuator based on second actuation data and comprising a second data pool unit for storing second data including the second actuation data;
wherein
- the control system is configured to synchronize the first and second data upon a change of the first and/or the second actuation data.

2. The furniture control system according to claim 1, wherein the first and/or the second actuation data include at least one of the following:
- a driving command for the connected actuator;
- a target position for the actuator;
- a driving speed;
- an acceleration profile;
- a deceleration profile.

3. The furniture control system according to claim 1 or 2, wherein
- the first control unit is configured to receive first event data;
- the second control unit is configured to receive second event data;
- the first control unit is configured to set or change the first actuation data based on the first event data; and
- the second control unit is configured to set or change the second actuation data based on the second event data.

4. The furniture control system according to claim 3, wherein
- the first data further include the first event data;
- the second data further include the second event data; and
- the control system is configured to synchronize the first and second data upon a change of the first and/or the second event data.

5. The furniture control system according to claim 3 or 4, wherein the first and/or the second event data include at least one of the following:
- a command received from a user input device connected to the control system;
- an error condition signalled by at least one of the first actuator and the second actuator;
- a hardware fault signalled by at least one of the first actuator and the second actuator;
- a signal that a target position cannot be reached by at least one of the first actuator and the second actuator;
- a signal that a driving command cannot be executed by at least one of the first actuator and the second actuator;
- an event that is suitable for inducing a change of state of at least one of the first actuator and the second actuator.

6. The furniture control system according to one of claims 3 to 5, further comprising a user input device connected to the control system or to one of the first and the second control unit, the user input device configured to provide commands to the control system or to one of the first and the second control unit in response to a user input.

7. The furniture control system according to one of claims 1 to 6, wherein the first and the second control unit are configured to execute a driving command for the respective connected actuator only after synchronization of the first and the second data.

8. The furniture control system according to one of claims 1 to 7, wherein the control system is configured to withhold from synchronizing the first and second data if no change of any of the first and the second data occurs.

9. The furniture control system according to one of claims 1 to 8, wherein the first and the second data pool unit are configured to withhold from communicating with each other if no change of any of the first and the second data occurs.

10. A method for controlling an adjustable furniture system comprising a user input device, a first and a second actuator and a first and a second control unit with a first and a second data pool unit, the method comprising:
- the user input device sending command data to the first control unit;
- the first control unit generating first actuation data based on the command data and storing the first actuation data in the first data pool unit;
- after detection of the storage of the first actuation data in the first data pool unit, storing second actuation data in the second data pool unit by synchronizing the first data pool unit to the second data pool unit;
wherein after completion of the synchronization
- the first control unit controlling the first actuator based on the first actuation data; and
- the second control unit controlling the second actuator based on the second actuation data.

11. The method according to claim 10, wherein controlling the first and the second actuator comprises executing a driving command included in the first and second actuation data.

12. The method according to claim 10 or 11, further comprising
- receiving event data by the first and/or the second control unit;
- storing the event data in the first or the second data pool unit; and
- synchronizing the first data pool unit to the second data pool unit after detection of the storage of the event data.

13. The method according to claim 12, wherein the first or the second actuation data are generated based on the event data.

14. The method according to one of claims 10 to 13, further comprising
- withholding from synchronizing the first and the second data pool unit if no change of any of the first and the second actuation data occurs.

15. The method according to one of claims 10 to 14, further comprising
- the first and the second data pool unit withholding from communicating with each other if no change of any of the first and the second actuation data occurs.
